# EUROPEAN PATENT SPECIFICATION

(11) **EP 2 146 884 B1**
(45) Date of publication and mention of the grant of the patent: **07.09.2011**
(21) Application number: 08737340.3
(22) Date of filing: 26.03.2008
(51) Int. Cl.: B60W 30/14, B60K 28/06

(54) **SYSTEM FOR ACTIVE AND DYNAMIC SAFETY CONTROL ON A VEHICLE**
SYSTEM ZUR AKTIVEN UND DYNAMISCHEN SICHERHEITSSTEUERUNG AN EINEM FAHRZEUG
SYSTÈME POUR COMMANDE DE SÉCURITÉ ACTIVE ET DYNAMIQUE SUR UN VÉHICULE

(30) Priority: 02.04.2007 IT MO20070115
(43) Date of publication of application: 27.01.2010
(73) Proprietor: Meta System S.p.A., 42100 Reggio Emilia (IT)
(72) Inventor: SIMONAZZI, Giuseppe, I-42100 Reggio Emilia (IT)
(74) Representative: Brunacci, Marco
(86) International application number: PCT/IB2008/000707
(87) International publication number: WO 2008/120066

(56) References cited:
- EP-A- 1 288 887
- DE-A1- 19 700 353
- US-A1- 2003 137 407
- US-A1- 2006 052 929

## Description

This invention relates to a system for active and dynamic safety control on a vehicle.

The growing number of road accidents has prompted the study and the use of an increasing number of instruments suitable for upgrading the active and passive safety of vehicles, many of which have become widely used or even mandatory by law.

With special reference to so-called "active safety", meaning all those instruments together suitable for limiting the possibility of an accident occurring, the use is known of mostly electronic-control apparatus, generally integrated in the vehicle electronics and suitable for indicating to the driver potentially hazardous situations or operating directly and dynamically on the vehicle.

Such electronic apparatus can be of various types and find different applications on the vehicle, in particular, some of the best known and widespread are, e.g., the Antilock Braking System (ABS) for controlling and optimising braking, the Electronic Stability Program (ESP) system for the electronic control of the traction and the stability of the vehicle and the system for the active control of the cruising speed of the vehicle.

The document EP 1 288 887 showing the features of the preamble of claim 1 discloses a system for providing control gain of vehicles, comprising a server provided with first receiver for receiving environment data obtained by vehicles of a plurality of user running in specific areas, and a second receiver for receiving learned data obtained by a plurality of users operating vehicles, and a storage device for accumulating the environment data and the learned data. The server further includes a transmitter for fetching environment data and learned data necessary to produce control gains and transmitting the fetched data to a user requesting it. In the vehicle of the user, the control gains are newly produced and previously produced control gains are changed to the newly produced ones.

The document EP 1 688 903 showing the features of the preamble of claim 1 discloses a transmitting/receiving unit that receives vehicle information including type and speed and position information sent from a terminal device carried on the vehicle, a unit that generates vehicle control information statistically formed for each type of vehicle on the basis of the vehicle information and the position information, a storage unit that stores the vehicle control information, a unit that searches the storage unit for vehicle control information corresponding to the position information of the vehicle received from the terminal device, and a transmitting/receiving unit that transmit the vehicle control information found to the terminal device.

The need is nevertheless felt to introduce new systems and apparatus able to improve the quality and the quantity of the data read during the use of the vehicle, and able to ensure a more effective use of such data suitable for considerably limiting the possibility of road accidents.

The main aim of this invention is to find a system for active and dynamic safety control on a vehicle that permits collecting data indicating the ways of driving a vehicle and which ensures the effective use of such data aimed at considerably limiting the possibilities of road accidents.

Another object of this invention is to provide a system for active and dynamic safety control on a vehicle that allows to overcome the limits of the known technique within the ambit of a simple and rational solution, which is easy and effective to use, as well as having a low cost.

The aforementioned objects are all achieved by the present system for active and dynamic safety control on a vehicle, comprising at least one electronic apparatus installable on a vehicle and having a reading unit for reading data relating to the ways of driving the vehicle and a control unit for controlling the active safety on said vehicle, characterized by the fact that said electronic apparatus comprises at least one communication unit with at least one remote unit suitable for processing the data read by said reading unit and suitable for piloting said active safety control unit starting with the processed data.

### Brief Description of the Drawings

Further characteristics and advantages of this invention will appear more evident from the description of a preferred, but not only, embodiment of a system for active and dynamic safety control on a vehicle, illustrated indicatively by way of non limiting example in the accompanying drawings, wherein:

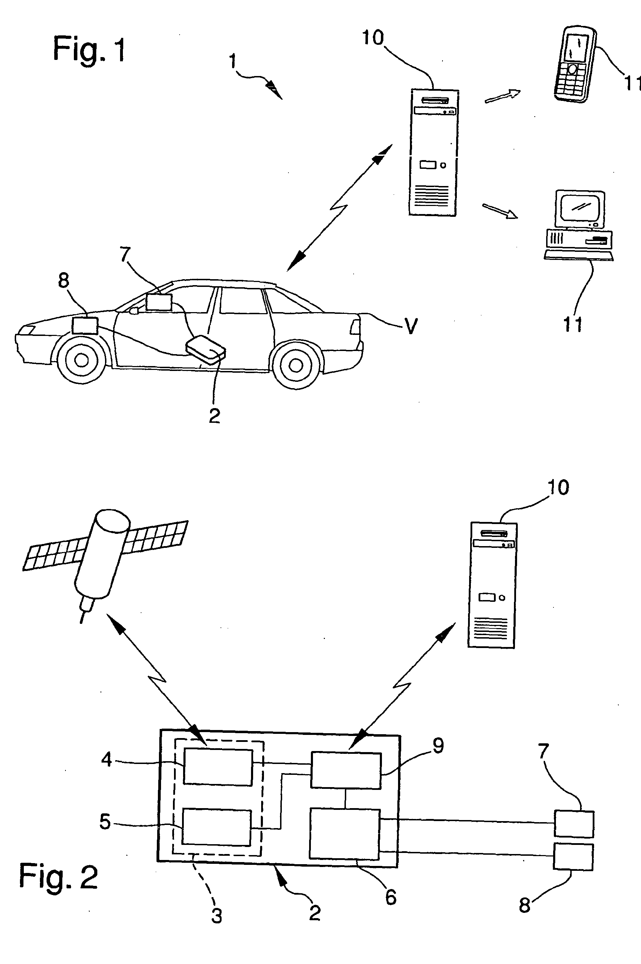

figure 1 is a general diagram illustrating the elements of the system for active and dynamic safety control on a vehicle, according to the invention;
figure 2 is a general diagram illustrating a possible embodiment of the electronic apparatus installable on a vehicle, according to the invention.

### Embodiments of the Invention

With particular reference to such illustrations, a system has been globally indicated by 1 for active and dynamic safety control on a vehicle, usable in particular to limit the possibility of an accident occurring during driving.

The system 1 comprises an electronic apparatus 2 installable on a vehicle V, of the type of a unit easily interfaceable with the electronics of the vehicle itself.

The electronic apparatus 2 has a reading unit 3 for reading data relating to the ways of driving the vehicle V such as, e.g., the instantaneous driving speed, the changes in instantaneous acceleration along one or more directions, the position of the vehicle V and more still.

The collection by means of the reading unit 3 of different types of data always aimed at determining the driving style of the driver of the vehicle V cannot however be ruled out.

In particular, the reading unit 3 comprises a locator device 4 for locating the position of the vehicle V, having a satellite signal receiver of the type commonly used in Global Positioning System (GPS), Galileo Positioning System satellite navigation systems or the like.

The reading unit 3 also comprises a measuring device 5 for measuring the instantaneous acceleration of the vehicle V along three directions substantially at right angles to one another. In particular, the measuring device 5 is composed of an accelerometer with three axes.

Usefully, the arrangement of the three directions of measurement of the instantaneous acceleration with respect to the vehicle V is not of importance for purposes of the correct operation of the accelerometer 5.

Determination means are in fact provided for determining the instantaneous acceleration of the vehicle V whatever the position of the accelerometer 5 and, therefore, of the three directions of measurement. Such determination means for determining the instantaneous acceleration can be, e.g., of the type of a software program integrated in the reading unit 3 in general or in the accelerometer 5 itself.

The presence of such determination means for determining the acceleration permits ample freedom as regards the positioning of the accelerometer 5 during the installation on the vehicle V, at the same time ensuring the reading of changes in acceleration along any direction in a reliable and safe way.

The possibility cannot however be ruled out of the locator device 4 and the accelerometer 5 not being made integrated in the electronic apparatus 2, but externally, so they can be connected to the reading unit 3 and suitable for communicating with this by means of suitable communication protocols. Furthermore, the reading unit 3 can be associated with the electronics of the vehicle V for the direct reading of the driving speed of the vehicle itself.

The electronic apparatus 2 also comprises a control unit 6 for controlling active safety on the vehicle V.

In particular, by "active safety" is meant the use of the control unit 6 for the dynamic control of the vehicle V while the driver is driving, aimed at considerably limiting the occurrence of potentially hazardous situations.

Advantageously, the control unit 6 is associable with signalling means 7 on the vehicle V, of the acoustic or visual type, suitable for signalling the presence of any potentially hazardous situations. Such signalling means 7 can be composed, e.g., of a monitor or, alternatively, they can be composed of the usual light indicators, of display units or of the acoustic indicators of the on-board instruments of the vehicle V, suitably interfaced with the control unit 6.

The interfacing of the control unit 6 with different signalling means 7 such as, e.g., a mobile phone, a handheld computer, etc., cannot however be ruled out. The control unit 6 is also associable with a speed limiting device 8 installed on the vehicle V.

In particular, the limiting device 8 can be operated from the control unit 6 in case potentially hazardous ways of driving are detected.

Usefully, the system 1 comprises a communication unit 9 for sending the read data through the reading unit 3 towards at least one remote unit 10.

In particular, the communication unit 9 comprises at least a transmitter and/or a receiver operating within the spectrum of frequencies with mobile telephony protocols of the GSM, GPRS, UMTS type or the like.

The remote unit 10, composed e.g. of an electronic computer, is suitable for processing the above data read by the reading unit 3, in particular by the locator device 4 and by the accelerometer 5, and is suitable for piloting the control unit 6 and therefore the limiting device 8 and the signalling means 7, starting with the processed data.

Usefully, the remote unit 10 comprises determination means for determining the instantaneous speed of the vehicle V. Such determination is made starting with the changes in position of the vehicle V read over time by the locator device 4. Such determination means can be, e.g. of the type of a dedicated software program or the like.

The remote unit 10 comprises first comparison means for comparing the instantaneous speed of the vehicle V thus determined with the speed allowed within the transit area of the vehicle V.

In particular, the speed allowed within the transit area is detected starting from the position read by the locator device 4 and following verification of the type of area corresponding to such position (e.g., urban area, interurban area, motorway).

The remote unit 10 also comprises second comparison means for comparing the instantaneous acceleration measurements read with reference acceleration measurements.

In particular, in the case of the acceleration measurements read being different to the reference acceleration measurements, then the second comparison means detect an "anomalous" way of driving by the driver due, e.g., to his/her falling asleep, feeling ill or simply driving dangerously.

The first and the second comparison means can, e.g., be of the dedicated software program type or the like.

Usefully, the remote unit 10 can comprise storage means for recording the read data and the data processed over time.

Advantageously, the system 1 comprises at least one remote terminal 11, if necessary also accessible to a user different to the driver of the vehicle V, having a unit for receiving the data processed by the remote unit 10 and display means for displaying such processed data.

Advantageously, the remote terminal 11 comprises an interface, of a keyboard type or the like, suitable for the user to enter instructions for piloting the control unit 6, and a unit for transmitting such piloting instructions to the remote unit 10.

The instructions entered from the remote terminal 11 can comprise, e.g., requests to activate the limiting device on the vehicle V, signals to be sent to the driver of the vehicle itself, etc.

In particular, the remote terminal 11 can be composed of an electronic computer connected to the remote unit through the common Internet (with connection suitably protected to prevent the undesired access of other users) or through a dedicated network.

Alternatively, the remote terminal 11 can be composed of a mobile phone, a handheld computer or the like, able to communicate with the remote unit 10 by means of the common mobile telephony protocols.

Advantageously, the first and the second comparison means of the remote unit 10 are operatively associated with means of generation and transmission of at least one warning signal towards the remote terminal 11.

In particular, the warning signal is sent to the remote terminal 11 once the vehicle V has been found to exceed the maximum speed allowed inside the transit area, or, once sudden accelerations or decelerations of the vehicle V have been detected, such as to indicate anomalous and potentially dangerous ways of driving on the part of the driver.

During operation, while the vehicle is being used, the reading unit 3 collects data by means of the locator device 4 and the accelerometer 5.

In particular, such collected data are such as to dynamically determine the style of driving of the driver.

The data thus read are subsequently sent to the remote unit 10 by means of the communication unit 9 and subsequently processed.

The processed data comprise data such as the instantaneous travelling speed of the vehicle V, determined starting with the data read by the locator device 4, and the changes in instantaneous acceleration of the vehicle itself.

During processing by the remote unit 10, the first and the second comparison means determine whether or not there are any anomalous ways of driving on the part of the driver of the vehicle V and, if necessary, generate warning signals subsequently sent to the remote terminal 11.

A user other than the driver of the vehicle V can thus, by means of the remote terminal 11, see the data read and processed by the remote unit 10 and, following the receiving of a warning signal, can intervene directly by means of the interface to enter instructions for piloting the control unit 6.

The instructions entered from the remote terminal 11 can comprise, e.g., requests to activate the limiting device on the vehicle V, signals to be sent to the driver of the vehicle itself, etc.

The instructions thus entered are sent to the remote unit 10, subsequently received by the communication unit 9 of the electronic apparatus 2 and sent to the control unit 6.

The control unit 6, according to the piloting instructions, activates the limiting device 8 and/or sends warning signals by means of the signalling means 7.

The triggering of the control unit 6 directly from the remote unit 10 cannot however be ruled out, starting with the comparison of the data read with predefined reference parameters.

It has in point of fact been ascertained how the described invention achieves the proposed objects and in particular the fact is underlined that the presence of the accelerometer and of the locator device permit collecting data indicating the ways the vehicle is being driven.

Furthermore, the processing of the remote unit and, if necessary, the intervention by means of the remote terminal of a user other than the driver ensure an effective use of the collected data aimed at considerably restricting the possibility of road accidents.

## Claims

1. System (1) for active and dynamic safety control on a vehicle, comprising at least one electronic apparatus (2) installable on a vehicle (V) and having a reading unit (3) for reading data relating to the ways of driving the vehicle (V), a control unit (6) for controlling the active safety on said vehicle (V) and at least one communication unit (9) with at least one remote unit (10) suitable for processing the data read by said reading unit (3) and suitable for piloting said active safety control unit (6) starting with the processed data, **characterized in that** it comprises at least one remote terminal (11) having a unit for receiving from said remote unit (10) warning signals determined starting with said read data and suitable for signalling anomalous ways of driving the vehicle (V) and display means for displaying said warning signals.

2. System (1) according to claim 1, **characterized by** the fact that said remote terminal (11) comprises at least one interface suitable for the user to enter instructions for piloting the active safety control unit (6) on said vehicle (V), and a unit for transmitting said piloting instructions to said remote unit (10).

3. System (1) according to one or more of the preceding claims, **characterized by** the fact that said control unit (6) is associable with signalling means (7) on said vehicle (V), of the acoustic or visual type.

4. System (1) according to one or more of the preceding claims, **characterized by** the fact that said control unit (6) is associable with at least one speed limiting device (8) of said vehicle (V).

5. System (1) according to claim 1, **characterized by** the fact that said reading unit (3) comprises at least one locator device (4) for locating the position of said vehicle (V).

6. System (1) according to claim 1, **characterized by** the fact that said reading unit (3) is associable with at least one locator device for locating the position of said vehicle (V).

7. System (1) according to claims 5 or 6, **characterized by** the fact that said locator device (4) comprises at least one satellite signal receiver.

8. System (1) according to one or more of the preceding claims, **characterized by** the fact that comprises at least one measuring device (5) for measuring the instantaneous acceleration of said vehicle (V) along at least one direction.

9. System (1) according to claim 8, **characterized by** the fact that said measuring device (5) is suitable for measuring the instantaneous acceleration of said vehicle (V) along three directions substantially at right angles to one another.

10. System (1) according to one or more of the preceding claims, **characterized by** the fact that said electronic apparatus (2) comprises determination means for determining the instantaneous acceleration of said vehicle (V) whatever the position of said three directions with respect to the vehicle (V) itself.

11. System (1) according to claim 10, **characterized by** the fact that said determination means are of the type of a software program.

12. System (1) according to claim 8, **characterized by** the fact that said measuring device (5) for measuring the instantaneous acceleration comprises at least one accelerometer (5).

13. System (1) according to claim 12, **characterized by** the fact that said accelerometer (5) is of the type of an accelerometer with three axes.

14. System (1) according to one or more of the preceding claims, **characterized by** the fact that said reading unit (3) can be associated with the electronics of said vehicle (V) for the reading of the instantaneous speed of the vehicle (V) itself.

15. System (1) according to one or more of the preceding claims, **characterized by** the fact that said communication unit (9) comprises at least a transmitter and/or a receiver operating within the spectrum of frequencies with mobile telephony protocols.

16. System (1) according to one or more of the preceding claims, **characterized by** the fact that said remote unit (10) comprises storage means of said read data.

17. System (1) according to one or more of the preceding claims, **characterized by** the fact that said remote unit (10) comprises determination means for determining the instantaneous speed of said vehicle (V) starting with the changes in position of said vehicle (V) over time.

18. System (1) according to one or more of the preceding claims, **characterized by** the fact that said remote unit (10) comprises first comparison means for comparing the instantaneous speed of said vehicle (V) with the speed allowed within the transit area of the vehicle (V) itself, said transit area being determined by said locator device (4).

19. System (1) according to one or more of the preceding claims, **characterized by** the fact that said remote unit (10) comprises second comparison means for comparing the instantaneous acceleration measurements read by said accelerometer with reference acceleration measurements.

20. System (1) according to claim 18 and 19, **characterized by** the fact that said first and said second comparison means are operatively associated with means of generation and transmission of said warning signals towards said remote terminal (11).

21. System (1) according to one or more of the preceding claims, **characterized by** the fact that at least one among said determination means, said first comparison means and said second comparison means is of the type of a software program or the like.

22. System (1) according to one or more of the preceding claims, **characterized by** the fact that said read data comprise the instantaneous travelling speed, the changes in instantaneous acceleration along at least one direction, the position of the vehicle (V), etc.

## Patentansprüche

1. System (1) für die aktive und dynamische Sicherheitssteuerung in einem Fahrzeug, mit wenigstens einer elektronische Vorrichtung (2), die in einem Fahrzeug (V) installiert werden kann und eine Leseeinheit (3) zum Lesen von Daten bezüglich der Fahrweisen, in denen das Fahrzeug (V) gefahren wird, eine Steuereinheit (6) zum Steuern der aktiven Sicherheit in dem Fahrzeug (V) und wenigstens eine Kommunikationseinheit (9) mit wenigstens einer entfernten Einheit (10), die die von der Leseeinheit (3) gelesenen Daten verarbeiten kann und die Steuereinheit (6) für die aktive Sicherheit ausgehend von den verarbeiteten Daten steuern kann, besitzt, **dadurch gekennzeichnet, dass** es wenigstens ein entferntes Endgerät (11), das eine Einheit besitzt, um Warnsignale, die ausgehend von den gelesenen Daten bestimmt werden, von der entfernten Einheit (10) zu empfangen, die geeignet ist, anomale Fahrweisen des Fahrzeugs (V) zu melden, und Anzeigemittel, um die warnsignale anzuzeigen, umfasst.

2. System (1) nach Anspruch 1, **dadurch** gekenntzeichnet, dass das entfernte Endgerät (11) wenigstens eine Schnittstelle, die dem Anwender ermöglicht, Befehle für die Steuerung der Steuereinheit (6) für die aktive Sicherheit in dem Fahrzeug (V) einzugeben, und eine Einheit zum Senden der Steuerbefehle zu der entfernten Einheit (10) umfasst.

3. System (1) nach einem oder mehreren der vorhergehenden Ansprüche, **dadurch gekennzeichnet, dass** der Steuereinheit (6) Signalgebungsmittel (7) des akustischen oder visuellen Typs in dem Fahrzeug (V) zugeordnet werden können.

4. System (1) nach einem oder mehreren der vorhergehenden Ansprüche, **dadurch** gekennzeichet, dass der Steuereinheit (6) wenigstens eine Geschwindigkeitsbegrenzungsvorrichtung (8) des Fahrzeugs (V) zugeordnet werden kann.

5. System (1) nach Anspruch 1, **dadurch gekennzeichnet, dass** die Leseeinheit (3) wenigstens eine Lokalisierungsvorrichtung umfasst, um die Position des Fahrzeugs (V) zu lokalisierten.

6. System (1) nach Anspruch 1, **dadurch gekennzeichnet, dass** der Leseeinheit (3) wenigstens eine Lokalisierungsvorrichtung zum Lokalisieren der Position des Fahrzeugs (V) zugeordnet werden kann.

7. System (1) nach den Ansprüche 5 oder 6, **dadurch gekennzeichnet, dass** die Lokalisierungsvorrichtung (4) wenigstens einen Satellitensianalempfänger umfasst.

8. System (1) nach einem oder mehreren der vorhergehenden Ansprüche, **dadurch gekennzeichnet, dass** es wenigstens eine Messvorrichtung (5) umfasst, um die momentane Beschleunigung des Fahrzeugs (V) zumindest in einer Richtung zu messen.

9. System (3) nach Anspruch 8, **dadurch gekennzeichnet, dass** die Messvorrichtung (5) die momentane Beschleunigung des Fahrzeugs (V) in drei Richtungen, die im Wesentlichen senkrecht zueinander orientiert sind, messen kann.

10. System (1) nach einem oder mehreren der vorhergehenden Ansprüche, **dadurch gekennzeichnet, dass** die elektronische Vorrichtung (2) Bestimmungsmittel umfasst, um die momentane Beschleunigung des Fahrzeugs (V) unabhängig von der Position der drei Richtungen in Bezug auf das Fahrzeug (V) selbst zu bestimmen.

11. System (1) nach Anspruch 10, **dadurch gekennzeichnet, dass** die Bestimmungsmittel vom Typ eines Software-Programms sind.

12. System (1) nach Anspruch 8, **dadurch gekennzeichnet, dass** die Messvorrichtung (5) zum Messen der momentanen Beschleunigung wenigstens einen Beschleunigungsmesser (5) umfasst.

13. System (1) nach Anspruch 12, **dadurch gekennzeichnet, dass** der Beschleunigungsmesser (5) vom Typ eines dreiachsigen Beschleunigungsmessers ist.

14. System (1) nach einem oder mehreren der vorhergehenden Ansprüche, **dadurch gekennzeichnet, dass** der Leseeinheit (3) Elektronik des Fahrzeugs (V) zugeordnet werden kann, um die momentane Geschwindigkeit des Fahrzeugs (V) selbst zu lesen.

15. System (1) nach einem oder mehreren der vorhergehenden Absprüche, **dadurch gekennzeichnet, dass** die Kommunikationseinheit (9) wenigstens einen Sender und/oder einen Empfänger umfasst, die in dem Spektrum von Frequenzen von Mobiltelephon-Protokollen arbeiten.

16. System (1) nach einem oder mehreren der vorhergehenden Ansprüche, **dadurch gekennzeichnet, dass** die entfernte Einheit (10) Speichermittel für die gelesenen Daten umfasst.

17. System (1) nach einem oder mehreren der vorhergehenden Ansprüche, **dadurch** gekennzeichet, dass die entfernte Einheit (10) Bestimmungsmittel umfasst, um die momentane Geschwindigkeit des Fahrzeugs (V) ausgehend von zeitlichen Änderungen der Position des Fahrzeugs (V) umfasst.

18. System (1) nach einem oder mehreren der vorhergehenden Ansprüche, **dadurch gekennzeichnet, dass** die entfernte Einheit (10) erste Vergleichsmittel zum Vergleichen der momentanen Geschwindigkeit des Fahrzeugs (V) mit der in dem Bewegungsbereich des Fahrzeugs (V) selbst zugelassene Geschwindigkeit umfasst, wobei der Bewegungsbereich durch die Lokalisierungsvorrichtung (4) bestimmt wird.

19. System (1) nach einem oder mehreren der vorhergehenden Ansprüche, **dadurch gekennzeichnet, dass** die entfernte Einheit (10) zweite Vergleichsmittel umfasst, um die Messungen der momentanen Beschleunigung, die von dem Beschleunigungsmesser abgelesen werden, mit Referenzbeschleunigungsmessungen zu vergleichen.

20. System (1) nach Anspruch 18 und 19, **dadurch gekennzeichnet, dass** den ersten und zweiten Vergleichsmitteln Mitteln zum Erzeugen und zum Senden der Warnsignal zu dem entfernten Endgerät (11) betriebstechnisch zugeordnet sind.

21. System (1) nach einem oder mehreren der vorhergehenden Ansprüche, **dadurch gekennzeichnet, dass** die Bestimmungsmittel und/oder die ersten vergleichsmittel und/oder die zweiten Vergleichsmittel vom Typ eines Software-Programms oder dergleichen sind.

22. System (1) nach einem oder mehreren der vorhergehenden Ansprüche, **dadurch gekennzeichnet, dass** die Lesedaten die momentane Bewegungsgeschwindigkeit, die Änderungen der momentanen Beschleunigung zumindest in einer Richtung, die Position des Fahrzeugs (V) und dergleichen umfassen.

## Revendications

1. Système (1) de contrôle actif et dynamique de la sécurité d'un véhicule, comprenant au moins un dispositif électronique (2) installable sur un véhicule (V) et ayant une unité de lecture (3) pour lire les données relatives à la modalité de conduite du véhicule (V) et au moins une unité de contrôle (6) pour contrôler la sécurité active sur ledit véhicule (V), et au moins une unité de communication (9) avec au moins une unité distante (10) adaptée pour le traitement des données lues par ladite unité de lecture (3) et pour le pilotage de ladite unité de contrôle (6) de sécurité active à partir des données traitées, **caractérisé par le fait qu'**il comprend au moins un terminal distant (11) ayant une unité pour recevoir de ladite unité distante (10) des signaux d'avertissement déterminés à partir desdites données lues et apte à signaler une modalité anormale de la conduite du véhicule (V) et des moyens de visualisation pour visualiser lesdits signaux d'avertissement.

2. Système (1) selon la revendication 1, **caractérisé par le fait que** ledit terminal distant (11) comprend au moins une interface adaptée pour l'utilisateur afin d'entrer des instructions pour le pilotage de l'unité de contrôle (6) de sécurité active sur ledit véhicule (V), et une unité pour transmettre, lesdites instructions de pilotage à ladite unité distante (10).

3. Système (1) selon l'une ou plusieurs des revendications précédentes, **caractérisé par le fait que** ladite unité de contrôle (6) est associable à des moyens de signalisation (7) sur ledit véhicule (V), du type acoustique ou visuel.

4. Système (1) selon l'une ou plusieurs des revendications précédentes, **caractérisé par le fait que** ladite unité de contrôle (6) est associable avec au moins un dispositif limiteur de vitesse (8) dudit véhicule (V).

5. Système (1) selon la revendication 1, **caractérisé par le fait que** ladite unité de lecture (3) comprend au moins un appareil de localisation (4) pour localiser la position dudit véhicule (V).

6. Système (1) selon la revendication 1, **caractérisé par le fait que** ladite unité de lecture (3) est associable avec au moins un appareil de localisation pour localiser la position dudit véhicule (V).

7. Système (1) selon les revendications 5 ou 6, **caractérisé par le fait que** ledit dispositif de localisation (4) comprend au moins un récepteur de signaux satellitaires.

8. Système (1) selon l'une ou plusieurs des revendications précédentes, **caractérisé par le fait qu'**il comprend au moins un dispositif de mesure (5) pour mesurer l'accélération instantanée dudit véhicule (V) le long d'au moins une direction.

9. Système (1) selon la revendication 8, **caractérisé par le fait que** ledit dispositif de mesure (5) est adapté pour mesurer l'accélération instantanée dudit véhicule (V) le long de trois directions sensiblement perpendiculaires entre elles.

10. Système. (1) selon l'une ou plusieurs des revendications précédentes, **caractérisé par le fait que** ledit dispositif électronique (2) comprend des moyens de détermination pour déterminer l'accélération instantanée dudit véhicule (V) quelle que soit la position desdites trois directions par rapport au véhicule (V) même.

11. Système (1) selon la revendication 10, **caractérisé par le fait que** lesdits moyens de détermination sont du type d'un logiciel.

12. Système (1) selon la revendication 8, **caractérisé par le fait que** ledit dispositif de mesure (5) pour mesurer l'accélération instantanée comprend au moins un accéléromètre (5).

13. Système (1) selon la revendication 12, **caractérisé par le fait que** ledit accéléromètre est du type d'un accéléromètre (5) à trois axes.

14. Système (1) selon l'une ou plusieurs des revendications précédentes, **caractérisé par le fait que** ladite unité de lecture (3) peut être associée à l'électronique dudit véhicule (V) pour la lecture de la vitesse instantanée du véhicule (V) même.

15. Système (1) selon l'une ou plusieurs des revendications précédentes, **caractérisé par le fait que** ladite unité de communication (9) comprend au moins un émetteur et / ou un récepteur fonctionnant dans le spectre des fréquences avec les protocoles de téléphonie mobile.

16. Système (1) selon l'une ou plusieurs des revendications précédentes, **caractérisé par le fait que** ladite unité distante (10) comprend des moyens de stockage desdites données lues.

17. Système (1) selon l'une ou plusieurs des revendications précédentes, **caractérisé par le fait que** ladite unité distante (10) comprend des moyens de détermination pour déterminer la vitesse instantanée dudit véhicule (V) à partir des variations de la position dudit véhicule (V) au fil du temps.

18. Système (1) selon l'une ou plusieurs des revendications précédentes, **caractérisé par le fait que** ladite unité distante (10) comprend des premiers moyens de comparaison pour comparer la vitesse instantanée dudit véhicule (V) avec la vitesse autorisée dans la zone de transit du véhicule (V) même, ladite zone de transit étant déterminée par ledit dispositif de localisation (4).

19. Système (1) selon l'une ou plusieurs des revendications précédentes, **caractérisé par le fait que** ladite unité distante (10) comprend des deuxièmes moyens de comparaison pour comparer les mesures d'accélération instantanée lues par ledit accéléromètre avec des mesures d'accélération de référence.

20. Système (1) selon les revendications 18 et 19, **caractérisé par le fait que** lesdits premiers et deuxièmes moyens de comparaison sont fonctionnellement associés à des moyens de production et de transmission d'au moins un signal d'avertissement vers ledit terminal distant (11).

21. Système (1) selon l'une ou plusieurs des revendications précédentes, **caractérisé par le fait qu'**au moins un parmi lesdits moyens de détermination, lesdits premiers moyens de comparaison et lesdits deuxièmes moyens de comparaison est du type d'un logiciel ou similaire.

22. Système (1) selon l'une ou plusieurs des revendications précédentes, **caractérisé par le fait que** lesdites données lues comprennent la vitesse de route instantanée, les variations de l'accélération instantanée le long d'au moins une direction, la position du véhicule (V), etc.
